# EUROPÄISCHE PATENTSCHRIFT

(11) **EP 0 622 465 B1**
(45) Veröffentlichungstag und Bekanntmachung des Hinweises auf die Patenterteilung: **22.03.2000**
(21) Anmeldenummer: 94106439.6
(22) Anmeldetag: 25.04.1994
(51) Int. Cl.: C21B 5/02

(54) **Verfahren zur Erzeugung von Metall aus Metallerzen**
Method for producing metal from metal ores
Procédé pour la production de métal à partir de minerais métalliques

(30) Priorität: 26.04.1993 DE 4313630; 21.12.1993 DE 4343768
(43) Veröffentlichungstag der Anmeldung: 02.11.1994
(60) Teilanmeldung: 99114759.6
(73) Patentinhaber: Der Grüne Punkt-Duales System Deutschland Aktiengesellschaft, 51145 Köln (DE)
(72) Erfinder: de Haas, Hans, Dr., D-28865 Lilienthal (DE); Janz, Joachim, Dr., D-28876 Oyten (DE); Mohnkern, Horstmar, D-27721 Ritterhude (DE); Voss, Manfred, D-28355 Bremen (DE)
(74) Vertreter: Eisenführ, Speiser & Partner

(56) Entgegenhaltungen:
- WO-A-88/05149
- DE-A- 4 104 252
- FR-A- 2 168 596
- JP-A- 51 033 493
- US-A- 3 998 606
- G. Menges, V. Lackner und R. Fischer, "Problem-free, Nationwide Plastics Recycling within a Year ?", plast europ, Juli 1992, Seite 255-260, Carl Hanser Verlag, München, DE
- G. Menges et al.: "Problem-free, Nationwide Pastics Recycling within a Year?", plast Europe, July 1992, Carl Hanser Verlag, S. 255-257
- Erdöl und Kohle, Erdgas Petrochemie, Februar 1965, S. 115-117
- Thyssen Technische Berichte, Heft 2/1978, S. 2
- Römpp Chemie-Lexikon, 9. Auflage, S. 87, 1539, 2213, 2214, 3676, 3677
- Stahl und Eisen, 1972, Nr. 26, S. 1318

## Beschreibung

Die Erfindung betrifft ein Verfahren zur Erzeugung von Metall aus Metallerzen, insbesondere von Roheisen aus Eisenerz, bei dem das Metalloxide enthaltende Erz mit einem aus Kohlenstoff und/oder Wasserstoff (sowie ggf. deren Verbindungen) enthaltenden Reduktionsgas in Reaktionskontakt gebracht wird, welches zuvor aus kohlenstoff- und/oder kohlenwasserstoffhaltigen Substanzen gewonnen wurde. Es ist geläufig, daß das zum großen Teil aus (selbst bei Eisen verschiedenen) Metalloxiden bestehende Erz einem Reduktionsprozeß unterworfen werden muß, ehe das Metall gewonnen werden kann. Diese Reduktion geschieht mit Hilfe von Kohlenstoff und ggf. Wasserstoff - oder auch deren Verbindungen -, die in einem Reduktionsgas enthalten sind, das zur Einwirkung auf das Metallerz gebracht wird.

Hierauf gelangt das reduzierte Metallerz in einen Schmelzprozeß. Das für die Reduktion benötigte Gas wird dabei im Bereich des Reduktions- und Schmelz-Prozesses selbst gewonnen, indem kohlenstoffhaltige Stoffe (z.B. Koks, Kohle, Öl, Erdgas) in die Zone des bereits reduzierten und erhitzten Metalles zugegeben werden, wodurch unter Zugabe von (Luft)-Sauerstoff eine Zerlegung bzw. Umwandlung in kohlenstoffhaltiges Gas erfolgt, welches der voraufgehenden Reduktion zugeführt wird.

Bekannt sind insoweit der herkömmliche Hochofenprozeß, bei dem im Hochofen - von oben nach unten fortlaufend - sowohl die Reduktion des Metallerzes als auch die Bildung des Reduktionsgases sowie die anschließende Schmelzverflüssigung des Metalls stattfinden. Bei diesem Hochofenprozeß wird dem Eisenerz und ggf. Zuschlagstoffen Koks als Kohlenstoffträger beigemischt. Es ist auch bekannt, zur besseren Steuerung des Hochofenprozesses und zur Ersparnis von Koks in den Windstrom im Bereich des Gestells des Hochofens Öl oder Kohlenstaub über Lanzen mit einzublasen, wodurch auch der Verbrauch an Koks reduziert wird. Dieses zusätzlich eingeblasene Material (Öl oder Kohlenstaub) muß sehr fein zerteilt eingeführt werden, um eine saubere und ausreichende Vergasung zu gewährleisten. Zusammenfassungen über das Einblasen von Kohlenstaub in Hochöfen enthalten zwei Artikel in der Zeitschrift "Stahl und Eisen", 101 (1981) vom 12.1.81, S. 35-38 und 105 (1985), Nr. 4 vom 25.2.85, S. 211-220. Das Einblasen von Kohlenstaub wurde insbesondere im Zuge steigender Ölpreise forciert. Es stellte sich dabei heraus, daß beim Einblasen wegen der kurzen, zur Verfügung stehenden Zeit von ca. 10 ms gute Ergebnisse, nämlich eine fast vollständige Vergasung des Kohlenstaubs, nur bei Korngrößen unterhalb 0,1 mm zu erzielen waren, selbst wenn Versuche bei einigen Anlagen auch mit größeren Korngrößen durchgeführt wurden.

Aus WO-A 88/05149 ist es bekannt, Brennstoff wie Kohlenstaub oder Granulate mit einer Korngröße bis 10 mm in den Windstrom eines Hochofens einzublasen. Als weitere Zusatzstoffe werden schadstoffbelastete, kohlenstoffhaltige Abfallstoffe, wie z.B. kohlenstoffhaltige Problemstoffe vermischt mit Flugasche oder ölhaltigen Deponiestoffen.

Es ist auch bereits vorgeschlagen worden, statt des Eindüsens von Öl oder Kohlenstaub andere kohlenstoffhaltige Abfallstoffe wie z.B. getrockneten Klärschlamm oder anderen kohlenstoffhaltigen Abfall wie Müll, Altpapier, Stroh, Lignit sowie Abfall von Holz, Kunststoff, Gummi oder dergl. einzubringen (DE-A-29 35 544). Mangels entsprechender Versuche oder Ergebnisse werden jedoch nur Vermutungen angestellt, wie diese Stoffe in den Hochöfen eingebracht werden sollen. Auch in der DE-A-41 04 252 wird vorgeschlagen, kohlenstoffhaltige Abfallstoffe dieser Art über die Windformen in feinkörniger oder staubförmiger Form in einen Hochofen einzublasen, wobei als Beispiel das Einbringen von Klärschlamm (rieselfähiger Staub) angeführt wird. Auch bei diesem Verfahren wird die Notwendigkeit der Feinkörnigkeit des einzublasenden Stoffes ausdrücklich betont.

Es ist zwar bereits in der Zeitschrift "Plast Europe, July 1992, Carl Hanser Verlag München, Seiten 255-257, vorgeschlagen worden, Kunststoffreste als Lieferant eines Reduktionsmittels im Hochofenprozeß zu nutzen und somit stofflich zu verwerten. Die bekannte Maßnahme sieht jedoch vor, in einem vorgeschalteten Extrusionsprozeß gemischte Kunststoffreste durch Temperatur- und Schereinwirkung soweit zu einem niedermolekularen Stoff abzubauen, daß dieser als Schwerölsubstitut in den Windstrom eines Hochofens eingeblasen werden kann. Diese sogenannte degradative Extrusion zur Verflüssigung des Kunststoffmaterials stellt jedoch eine apparativ und verfahrenstechnisch aufwendige Maßnahme dar, die den Gesamtprozeß erschwert und verteuert. Zudem wird dieses Aufbereitungsverfahren durch die in Kunststoffabfällen enthaltenen metallischen, organischen und anorganischen Verunreinigungen empfindlich gestört.

Wie bereits erwähnt, muß bei dem bekannten, zusätzlichen Einblasen von Öl oder Kohlenstaub in den Windstrom im Bereich des Schachtofens, insbesondere Hochofens, das Material in sehr fein zerteilter Form eingeblasen werden, um wegen der kurzen zur Verfügung stehenden Zeit eine einwandfreie Vergasung ohne nennenswerte Rußbildung zu erreichen. Liegt die maximale Größe der Kohleteilchen nicht bei ca. 0,1 mm, sondern bei größeren Korngrößen, so führt dies nur zu unzureichenden Ergebnissen.

Der Grund dafür liegt vornehmlich in den relativ geringen Anteilen an flüchtigen Bestandteilen bei der Kohle, so daß ein "Zerspratzen" der Einzelpartikel und damit eine weitere Erhöhung der Reaktionsoberfläche nicht in ausreichendem Umfange erfolgen kann. - Beim Einblasen von Öl, das praktisch weitestgehend aus flüchtigen Bestandteilen besteht, ist jedoch gleichfalls ein Zerstäuben zu Partikelgrößen deutlich unter 0,1 mm erforderlich.

Es erschien daher zunächst naheliegend, daß auch Kunststoff, der in der chemischen Zusammensetzung dem Öl recht nahe kommt, zu einer vergleichbaren Korngröße aufgemahlen werden muß, um eine ausreichende, schnelle Reaktion im Hochofen zu gewährleisten. Eine solche feine Zermahlung ist jedoch bei Kunststoffen, insbesondere Thermoplasten, unmöglich, da das Material bei zu feiner Zermahlung klebrige Eigenschaften annimmt. Es ist auch bereits daran gedacht worden, solche Kunststoffe auf niedrige Temperaturen zu kühlen und dieses dann spröde Material danach zu zermahlen. Ein solches Verfahren scheidet jedoch vom Aufwand her für die vorliegenden Zwecke aus.

Ausgehend von den eingangs geschilderten bekannten Verfahren ist es die Aufgabe der Erfindung, Kunststoffabfall, auch in organisch und/oder anorganisch verunreinigter Form, als Lieferant für die Bestandteile des Reduktionsgases nutzbar zu machen. Kunststoffabfall fällt dauernd in großen Mengen an und stellt ein ernsthaftes Entsorgungsproblem dar. Er liegt zumeist, wenn nicht ausschließlich, in fester Form vor, sei es als - häufig stark verunreinigter - Verpackungsmüll, sei es als Verschnitt o.ä. im Zuge der Produktion von Kunststoffgegenständen.

Diese Aufgabe wird gemäß Anspruch 1 dadurch gelöst, daß die beim Verfahren der eingangs bezeichneten Gattung zur Gewinnung des Reduktionsgases zugeführten kohlenstoff- und/oder kohlenwasserstoffhaltigen Substanzen als Kunststoffagglomerat in zerkleinerter, fluidisierter Form in den Windstrom im Gestell eines metallurgischen Schachtofens, insbesondere eines Hochofens, eingeblasen werden, wobei die Teilchengröße des Kunststoffes vorwiegend im Bereich von 1-10 mm, insbesondere 5 mm, liegt. Es wird also beispielsweise Verpackungsmüll aus Kunststoff - dessen Entsorgung heute noch ein weitgehend ungelöstes Problem darstellt - in zerkleinerter Form in den Blasformbereich eingeführt. Bevorzugte Ausführungsformen des Verfahrens nach Anspruch 1 finden sich in den abhängigen Ansprüchen.

Es wurde überraschenderweise gefunden, daß beim Einblasen von Kunststoffagglomerat in den Windstrom eines metallurgischen Schachtofens sehr gute Ergebnisse erzielt werden, wenn das Kunststoffagglomerat nach einem Zerkleinern, Shreddern oder thermischen Vermahlen mit einer weitaus höheren Teilchengröße, nämlich vorwiegend im Bereich von 1-10 mm, insbesondere bei 5 mm, liegt; eine solche Teilchengröße ist ohne großen Aufwand zu erreichen. Diese Teilchengröße hat gleichzeitig den Vorteil, daß im Bereich der Kunststoffaufbereitung, Fluidisierung und Dosierung keine Explosionsgefahr - wie z.B. beim Einblasen von Kohlenstaub - besteht, so daß als Fluidisierungsgas kein Inertgas erforderlich ist, sondern Preßluft eingesetzt werden kann. Der Kunststoff wird in Form eines Agglomerats mit hoher spezifischer Oberfläche eingeblasen. Hierbei hat sich insbesondere eine Schüttdichte des Kunststoff-Agglomerats von größer als 0,35 bewährt.

Der Grund für dieses überraschende Verhalten des Kunststoffagglomerates dürfte in Besonderheiten seines stofflichen Aufbaus nach der Zerkleinerung liegen: Während bei dem - chemisch ähnlich aufgebauten - Öl die sich bildenden kompakten Tröpfchen ein sehr ungünstiges Verhältnis von Oberfläche zur Masse und somit nur für kleine Durchmesser eine ausreichende Reaktionsfähigkeit aufweisen, ist bei Kunststoffagglomerat durch den Zerkleinerungsprozeß die spezifische Oberfläche durch die Kombination aus mechanischer und thermischer Beanspruchung so zerklüftet und damit vergrößert, daß das Material auch nach nur teilweisem Zerkleinern eine hervorragende Reaktionsfähigkeit aufweist.

Es wurde somit gefunden, daß Kunststoffagglomerat bzw. Abfall-Kunststoffagglomerat bei Anwendung eines einstufigen Reduktionsverfahrens wie dem Hochofenprozeß nach einer wenig aufwendigen Vorzerkleinerung als wertvolles Reduktionsmittel eingesetzt werden kann, wodurch nicht nur Kohle bzw. Koks gespart, sondern auch Kunststoffabfälle nutzbringend verwertet werden können.

In dem Fall, daß der metallurgische Schachtofen ein Hochofen ist, wird das Kunststoffagglomerat über Lanzen, die in Luftdüsen oder Windformen angeordnet sind, in fluidisierter Form in den Luftstrom eingeblasen. Hierbei können entweder alle Lanzen mit fluidisierten Kunststoffteilchen beschickt werden, oder es werden einige der Lanzen mit fluidisierten Kunststoffteilchen beschickt, während den anderen Öl oder Kohle (wie bisher) zugeführt wird. In einem solchen Falle ist es von Vorteil, die mit Kunststoffteilchen und die mit Öl oder Kohle beschickten Lanzen untereinander gleichmäßig verteilt um den Umfang der Windformanordnung anzuordnen.

Der Einblasdruck an den Lanzen liegt vorzugsweise 0,5 · 10⁵ bis 1,5 · 10⁵ Pa über dem Druck im Hochofen. Die Strömungsgeschwindigkeit in den Lanzen ist so hoch zu bemessen, daß Verbackungen (durch Auf- oder Anschmelzen) des Kunststoffagglomerates in der Lanze durch Wärmerückstrahlung aus dem Ofeninnern vermieden werden, das Verhältnis von Strömungsgeschwindigkeit zum Lanzenquerschnitt liegt vorzugsweise zwischen 20000 und 40000 1/sec·m, insbesondere bei 25000 1/sec·m. Eine Beachtung dieser Kennzahl war beim Einblasen von Kohlenstaub oder Öl in die Lanzen der Windform eines Hochofens nicht erforderlich, da diese anderen Stoffe nicht schmelzen und somit keine Verbackungen zu befürchten sind.

Die Mischwindtemperatur in einem Hochofen liegt normalerweise im Bereich von 1000 bis 1250°C. Eine zu niedrige Temperatur führt zu einer ungenügenden oder zu langsamen Vergasung des Kunststoffagglomerates. Zweckmäßigerweise liegt die Mischwindtemperatur deshalb über 1100°C. Die Einblasmenge von Kunststoffagglomerat kann über einen weiten Bereich schwanken; sie kann jedoch wegen der besonderen Eigenschaft von Kunststoffagglomerat höher liegen, als z.B. beim Einblasen von Öl. Liegt die Einblasmenge des Kunststoffagglomerates über 70 kg/t RE, so wird dem Windstrom zur besseren Vergasung O₂ zugegeben. Für jedes den Wert von 70 kg/t RE überschreitende kg/t RE hat sich eine Anreicherung des Windes um 0,05-0,1 %, vorzugsweise 0,08%, O₂ als günstig herausgestellt.

Die Dosierung und Fluidisierung der Kunststoffteilchen kann auf verschiedene Weise realisiert werden. Ein Weg besteht darin, die Kunststoffteilchen in getrennten Vorrichtungen nacheinander zu fluidisieren und anschließend zu dosieren. Diese Lösung hat den Vorteil, daß die Dosiervorrichtung auf einfache Weise dargestellt werden kann, z.B. durch eine mechanische Schnecken-Dosiervorrichtung oder durch eine Zellenrad-Dosiervorrichtung. Ein anderer Weg besteht darin, die Kunststoffteilchen in einer kombinierten Fluidisierungsund Dosiervorrichtung zu fluidisieren und zu dosieren. Diese Lösung erfordert jedoch wegen des schwankenden Ofendruckes eine schnelle Regeleinrichtung, mit der der Einblasdruck dem Ofendruck angepaßt werden kann. Eine besonders einfache Lösung besteht in der Verwendung einer druckdichten Zellenradschleuse.

Weitere vorteilhafte Ausgestaltungen der Erfindung sind den Unteransprüchen zu entnehmen.

Die Erfindung wird nachfolgend anhand eines Ausführungsbeispiels unter Bezug auf die beigefügten Zeichnungen näher erläutert.

Es zeigen:
- Fig. 1: eine schematische Darstellung eines Hochofens einschließlich der entsprechenden Einrichtungen zur Zuführung von fluidisiertem Kunststoffagglomerat und einschließlich der entsprechenden Einrichtungen zur Zuführung eines erhitzten Windstromes;
- Fig. 2: eine alternative Ausführungsform; und
- Fig. 3: eine Düsen-Lanzen-Anordnung zum Einblasen von fluidisiertem Kunststoffagglomerat in die Windformen oder Düsen eines Hochofens.

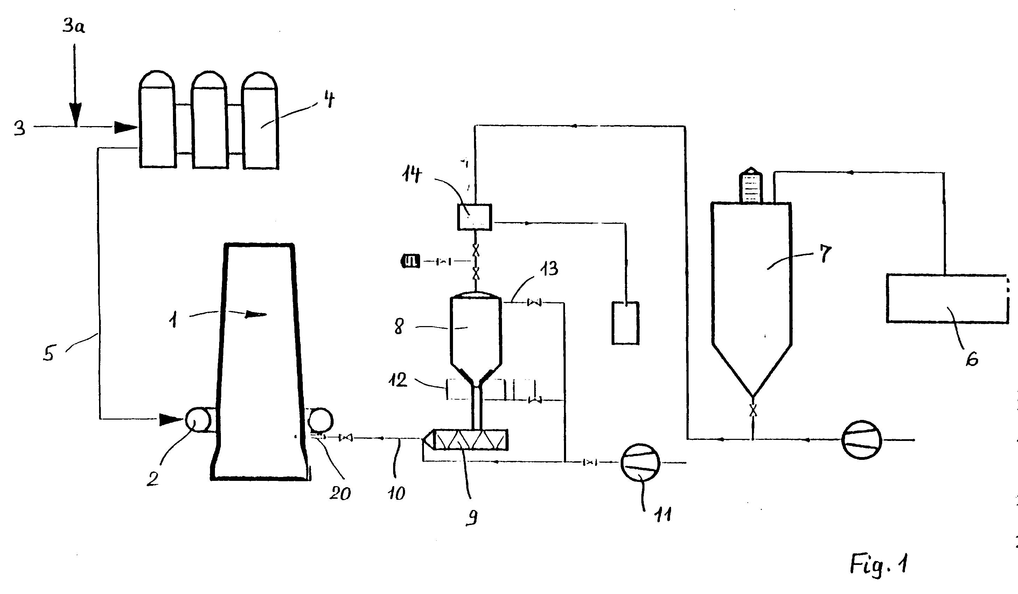

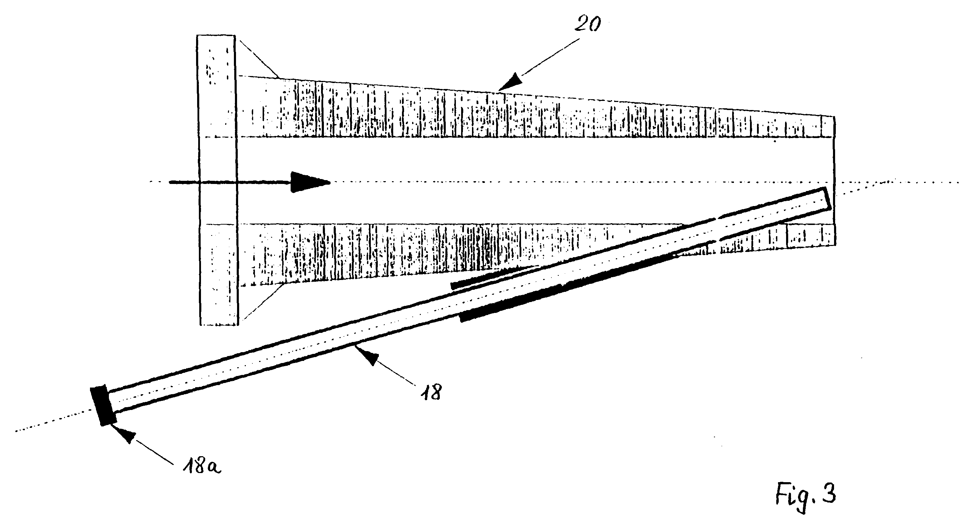

In Fig. 1 ist ein in üblicher Weise aufgebauter Hochofen 1 gezeigt, der im unteren Gestellbereich eine Vielzahl von gleichmäßig um den Umfang verteilten Düsen oder Windformen 20 (s. Fig. 3) aufweist, denen über eine Leitung 5 und eine Ringleitung 2 in einem Winderhitzer 4 erhitzter Wind 3 zugeführt wird. Darüber hinaus kann der Wind 3 auch noch mit Sauerstoff 3a (O₂) angereichert werden. Der Übersichtlichkeit halber ist in Fig. 1 nur eine Düse 20 angedeutet.

Einige oder alle der Düsen 20 weisen eine oder mehrere Lanzen 18 auf, über die Zusatzbrennstoff eingeblasen werden kann. Bei den bisher bekannten Hochöfen war dies entweder Kohlenstaub oder Öl, wodurch ein besseres Betriebsverhalten des Hochofens 1 und eine Ersparnis an Koks zu erzielen war. Die übliche Anzahl von Düsen 20 der Windformanordnung beträgt z.B. 32, und jede Düse hat einen Durchmesser von z.B. 140 mm. Bei der Zuführung von Kohlenstaub oder Öl sind meistzwei Lanzen vorgesehen, die einen Durchmesser von typischerweise 12 bzw. 8 mm haben. Im vorliegenden Fall ist in jeder Düse 20 nur eine Lanze 18 zur Zuführung von fluidisiertem Kunststoffagglomerat vorgesehen und hat z.B. einen Durchmesser von 28 mm.

In der Windformanordnung können entweder alle Lanzen 18 mit fluidisiertem Kunststoffagglomerat beschickt werden, oder die Düsen 20 sind gemischt bestückt, d.h., einige Düsen weisen z.B. zwei Öllanzen auf, während andere Düsen 20 wiederum mit einer Kunststofflanze 18 bestückt sind. Es ist jedoch zweckmäßig, die Verteilung von Kunststofflanzen 18 und Öllanzen gleichmäßig untereinander über den Umfang der Windformanordnung vorzunehmen.

Die Aufbereitung des Kunststoffes erfolgt im vorliegenden Ausführungsbeispiel folgendermaßen:

Aus einer Kunststoffaufbereitungsanlage 6 wird einem Silo 7 zerkleinerter Kunststoff in der Form eines Agglomerats mit hoher spezifischer Oberfläche zugeführt und einer Korngröße von 1 - 10 mm, vorzugsweise 5 mm. Bewährt hat sich die Verwendung von Kunststoff, der zu einem Agglomerat mit einer Schüttdichte von größer als 0,35 führt. Für diese Zwecke sind Kunststoff-Verpackungsbecher o.dgl. geeignet, während z.B. Kunststoffolien beim Zerkleinern zu einergeringeren Schüttdichte führen, so daß vor dem oder beim Einblasen besondere Vorkehrungen getroffen werden müssen, um eine ausreichende Menge einblasen zu können.

In Fig. 1 ist dann ein Einblasgefäß 8 dargestellt, in das das Kunststoffagglomerat über ein Grobkornsieb 14 eingebracht und durch Einblasen eines Fluidisierungsgases mittels eines Gebläses 11 über Leitungen 12 und 13 fluidisiert wird. Bei einem Einblasgefäß von z.B. 3 m³ Volumen sind ca. 2-25 m³ Fluidisierungsgas/h erforderlich. Anschließend wird das fluidisierte Kunststoffagglomerat in einer getrennten Dosiervorrichrung 9, z.B. einer mechanischen Schnecken-Dosiervorrichtung oder einer Zellenrad-Dosiervorrichtung, dosiert und über eine Leitung 10 den entsprechenden Lanzen 18 der Windformanordnung gleichmäßig zugeführt. Die Förderung der Kunststoffteilchen erfolgt hierbei mittels Flugstromförderung, d.h., bei hohem Gasanteil, z.B. bei einem Verhältnis von 5 bis 30 kg Kunststoffagglomerat pro 1 kg Fluidisierungsgas. Als Fluidisierungsgas wird im vorliegenden Beispiel Preßluft verwendet, da wegen der Größe der Kunststoffteilchen von 1-10 mm keine Explosionsgefahr besteht.

Die Einblasmenge des Kunststoffagglomerates ist über weite Grenzen variierbar (z.B. 30-150 kg Kunststoff /t RE). Es wurde außerdem herausgefunden, daß bei gleich guter Vergasung eine um den Faktor 1,5 höhere Menge an Kunststoffagglomerat im Vergleich zu Öl eingeblasen werden kann. Liegt die Einblasmenge des Kunststoffagglomerates über 70 kg/t RE, so wird zwecks guter Vergasung dem Windstrom zweckmäßigerweise O₂ zugegeben, wie bereits vorstehend erwähnt. Für jedes über dem Wert von 70 kg/t RE liegende kg Kunststoffagglomerat /t RE sollte der Wind dann mit 0,05-0,1 % O₂ angereichert werden, vorzugsweise 0,08% O₂. Für eine gute Vergasung liegt die Mischwindtemperatur aus dem Winderhitzer 4 über 1100°C. Der Einblasdruck an den Lanzen 18 liegt zweckmäßigerweise 0,5 · 10⁵ bis 1,5 · 10⁵ Pa über dem Druck im Hochofen 1.

Da Kunststoff bei höheren Temperaturen - im Gegensatz zu Kohlenstaub oder Öl - schmilzt, besteht die Gefahr von Verbackungen des Kunststoffagglomerates vor dem Austritt aus der Einblaslanze 18 durch Wärmerückstrahlung aus dem Inneren des Hochofens. Aus diesem Grunde muß die Strömungsgeschwindigkeit des Gases mit den schwebenden Kunststoffteilchen im Vergleich zum Rohrquerschnitt der Lanze 18 ausreichend hoch sein, um ein Auf- oder Anschmelzen und damit Verbacken des Kunststoffagglomerates in der Lanze 18 durch Wärmerückstrahlung zu vermeiden. Ein geeignetes Verhältnis der Strömungsgeschwindigkeit zum Lanzenquerschnitt liegt im Bereich von 20000 bis 40000 1/sec·m, vorzugsweise bei 25000 1/sec·m. Liegt dieser Wert zu niedrig, besteht die Gefahr von Verbackungen, liegt der Wert zu hoch, so tritt ein zu hoher Verschleiß in den Lanzen 18 auf. Darüberhinaus müssen bei allen Transportleitungen, insbesondere auch im Anschlußbereich 18a der Lanzen 18, Unstetigkeiten und Einschnürungen im Strömungsverlauf sowie Radien von kleiner als 1 m bei Krümmungen vermieden werden.

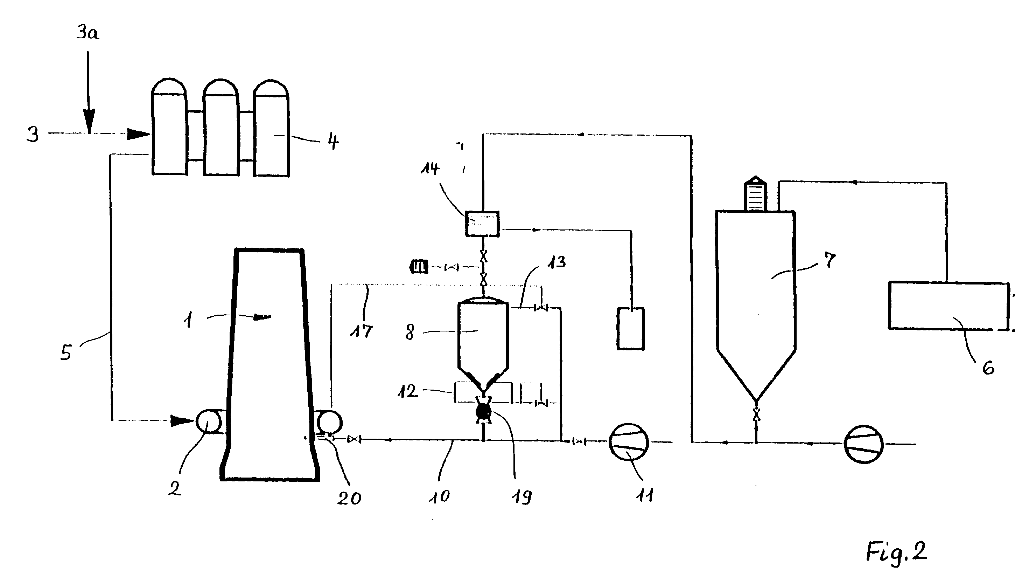

In der Anordnung nach Fig. 1 erfolgt die Dosierung durch eine getrennte Dosiervorrichtung 9. Eine andere Lösung ist in Fig. 2 gezeigt und kann darin bestehen, das Fluidisieren und Dosieren in einem Zuge durchzuführen. Hierzu ist im unteren Bereich des Einblasgefäßes ein Kugelhahn 19 als Dosiereinrichtung vorgesehen. Die Feineinstellung erfolgt über die Druckeinstellung und die Fluidisierungsgasmenge. Diese Lösung erfordert jedoch eine genaue und schnelle Regelung der Preßluftzufuhr an der oberen Leitung 13 des Einblasgefäßes 8 abhängig von dem schwankenden Innendruck des Hochofens 1. Zu diesem Zwecke ist also an geeigneter Stelle im Hochofen 1 ein Druckfühler vorgesehen, der über eine Regelschleife 17 ein Ventil in der Leitung 13 schnell nachregelt, um zu einer genauen Dosierung zu kommen.

Die Fluidisierung und Dosierung der Kunststoffagglomerat-Teilchen kann auch mittels einer druckdichten Zellenradschleuse erfolgen. In diesem Fall kann das Einblasgefäß 8 entfallen.

## Patentansprüche

1. Verfahren zur Erzeugung von Metall aus Metallerzen, insbesondere von Roheisen aus Eisenerz, bei dem das Metalloxid enthaltende Eisenerz mit einem Kohlenstoff und/oder Wasserstoff oder deren Verbindungen enthaltenden Reduktionsgas in Reaktionskontakt gebracht wird, wobei das Reduktionsgas zuvor aus festen kohlenstoff- und/oder kohlenwasserstoffhaltigen Substanzen gewonnen wurde, wobei Kunststoff in zerkleinerter, fluidisierter Form als Agglomerat mit zerklüfteter und somit hoher spezifischer Oberfläche in den Windstrom im Gestell eines metallurgischen Schachtofens, insbesondere eines Hochofens (1) eingeblasen wird und die Teilchengröße des Kunststoffs im Bereich von 1 mm bis 10 mm liegt.

2. Verfahren nach Anspruch 1,
dadurch gekennzeichnet, daß die Kunststoffteilchen durch Flugstromförderung gefördert werden, insbesondere bei einem Verhältnis von 5 bis 30 kg Kunststoff pro 1 kg Fluidisierungsgas, insbes. Luft.

3. Verfahren nach Anspruch 1 oder 2,
dadurch gekennzeichnet, daß die Teilchengröße des Kunststoffs vorwiegend im Bereich von 5 mm liegt.

4. Verfahren nach einem der Ansprüche 1 bis 3,
dadurch gekennzeichnet, daß der Kunststoff über Lanzen (18), die in Luftdüsen (20) eines Hochofens (1) angeordnet sind, in fluidisierter Form in den Luftstrom eingeblasen wird.

5. Verfahren nach Anspruch 4,
dadurch gekennzeichnet, daß alle Lanzen (18) mit fluidisierten Kunststoffteilchen beschickt werden.

6. Verfahren nach Anspruch 4,
dadurch gekennzeichnet, daß einige der Lanzen (18) mit fluidisierten Kunststoffteilchen und andere mit Öl oder Kohle beschickt werden, bei gleichmäßiger Verteilung der mit Kunststoffteilchen und der mit Öl oder Kohle beschickten Lanzen (18) untereinander um den Umfang der Windformanordnung.

7. Verfahren nach Anspruch 4,
dadurch gekennzeichnet, daß der Einblasdruck an den Lanzen (18) 0,5 · 10⁵ bis 1,5 · 10⁵ Pa über dem Druck im Hochofen (1) liegt.

8. Verfahren nach Anspruch 4,
dadurch gekennzeichnet, daß das Verhältnis der Strömungsgeschwindigkeit zum Durchmesser der Lanzen (18) so hoch ist, daß Verbackungen (durch Auf- oder Anschmelzen) des Kunststoffs in den Lanzen (18) durch Wärmerückstrahlung vermieden werden, insbesondere die Strömungsgeschwindigkeit zwischen 20000 und 40000 1/sec·m liegt, vorzugsweise bei 25000 1/sec·m.

9. Verfahren nach einem der vorstehenden Ansprüche,
dadurch gekennzeichnet, daß die Mischwindtemperatur größer als 1100°C ist.

10. Verfahren nach einem der vorstehenden Ansprüche,
dadurch gekennzeichnet, daß bei einer Einblasmenge des Kunststoffs über 70 kg/t RE der Windstrom mit O₂ angereichert wird, insbesondere mit einer Menge von 0,05-0,1%, vorzugsweise 0,08%, O₂ pro überschreitendes kg Kunststoff /t RE.

11. Verfahren nach einem der Ansprüche 1 bis 10,
dadurch gekennzeichnet, daß die Kunststoffteilchen in getrennten Vorrichtungen (8, 9) nacheinander fluidisiert und dosiert werden.

12. Verfahren nach einem der Ansprüche 1 bis 10,
dadurch gekennzeichnet, daß die Kunststoffteilchen in einer kombinierten Fluidisierungs- und Dosiervorrichtung (8, 19) fluidisiert und dosiert werden, wobei der Einblasdruck über eine schnelle Regelschleife (17) ständig abhängig vom Ofendruck angepaßt wird.

13. Verfahren nach Anspruch 12,
dadurch gekennzeichnet, daß als kombinierte Fluidisierungs- und Dosiervorrichtung eine druckdichte Zellenradschleuse verwendet wird.

## Claims

1. Process for producing metal from metal ores, in particular pig iron from iron ore, in which the iron ore which contains the metal oxide is brought into reaction contact with a reducing gas which contains carbon and/or hydrogen or compounds thereof, with the reducing gas having been obtained previously from solid substances containing carbon and/or hydrocarbon, with plastics material in comminuted and fluidised form being injected as an agglomerate having a fissured and hence large specific surface into the blast current in the hearth of a metallurgical shaft furnace, in particular a blast furnace (1), and the particle size of the plastics material being within the range 1 mm to 10 mm.

2. Process according to Claim 1,
characterised in that the particles of plastics material are conveyed by entrainment in the current, in particular at a ratio of from 5 to 30 kg plastics material per 1 kg fluidising gas, in particular air.

3. Process according to Claim 1 or 2,
characterised in that the particle size of the plastics material is predominantly in the region of 5 mm.

4. Process according to one of Claims 1 to 3,
characterised in that the plastics material is injected in fluidised form into the air current by way of lances (18) arranged in air nozzles (20) of a blast furnace (1).

5. Process according to Claim 4,
characterised in that all the lances (18) are fed with fluidised particles of plastics material.

6. Process according to Claim 4,
characterised in that some of the lances (18) are fed with fluidised particles of plastics material and others with oil or coal, with the lances (18) fed with particles of plastics material and those fed with oil or coal being distributed in uniform manner around the circumference of the blast tuyere array between one another.

7. Process according to Claim 4,
characterised in that the injection pressure at the lances (18) is from 0.5 · 10⁵ to 1.5 · 10⁵ Pa above the pressure within the blast furnace (1).

8. Process according to Claim 4,
characterised in that the ratio of the flow rate to the diameter of the lances (18) is sufficiently high to prevent the plastics material from clogging the lances (18) (owing to melting and adhesion) as a result of heat reflection, in particular the flow rate is between 20,000 and 40,000 l/sec · m preferably around 25,000 l/sec · m.

9. Process according to one of the preceding claims,
characterised in that the mixed blast temperature is greater than 1,100°C.

10. Process according to one of the preceding claims,
characterised in that when the quantity of plastics material injected exceeds 70 kg per tonne of pig iron the blast current is enriched with O₂, in particular with a quantity of from 0.05 to 0.1%, preferably 0.08%, of O₂ for every excess kg of plastics material per tonne of pig iron.

11. Process according to one of Claims 1 to 10,
characterised in that the particles of plastics material are fluidised and metered sequentially in separate devices (8, 9).

12. Process according to one of Claims 1 to 10,
characterised in that the particles of plastics material are fluidised and metered in a combined fluidising and metering device (8, 19), with the injection pressure being adjusted constantly in a manner dependent on the furnace pressure by way of a rapid regulation loop (17).

13. Process according to Claim 12,
characterised in that a pressure-tight cellular wheel sluice is used as the combined fluidising and metering device.

## Revendications

1. Procédé pour produire du métal à partir de minerais métalliques, en particulier de la fonte brute à partir de minerai de fer, dans lequel le minerai de fer contenant l'oxyde métallique est amené en contact réactionnel avec un gaz réducteur contenant du carbone et/ou de l'hydrogène ou leurs composés, le gaz réducteur étant extrait auparavant de substances solides contenant du carbone et/ou des hydrocarbures, dans lequel de la matière plastique est introduite par insufflation sous une forme pulvérisée, fluidisée en tant qu'agglomérat présentant une surface fissurée et donc ayant une surface spécifique élevée dans le courant éolien dans la cuve d'un fourneau droit, en particulier d'un haut fourneau (1) et la granulométrie de la matière plastique est de 1 à 10 mm.

2. Procédé selon la revendication 1, caractérisé en ce que les particules de matière plastique sont transportées par un courant aérodynamique, en particulier dans un rapport de 5 à 30 kg de matière plastique pour 1 kg de gaz de fluidisation, en particulier de l'air.

3. Procédé selon la revendication 1 ou 2, caractérisé en ce que la granulométrie de la matière plastique est essentiellement de l'ordre de 5 mm.

4. Procédé selon l'une quelconque des revendications 1 à 3, caractérisé en ce que la matière plastique est insufflée par des lances (18), qui sont disposées dans des buses d'air (20) d'un haut fourneau (1), sous forme fluidisée dans le courant d'air.

5. Procédé selon la revendication 4, caractérisé en ce que toutes les lances (18) sont revêtues de particules de matière plastique fluidisées.

6. Procédé selon la revendication 4, caractérisé en ce que quelques unes des lances (18) sont revêtues de particules de matière plastique fluidisées et d'autres sont revêtues d'huile ou de charbon, pour une répartition uniforme des lances (18) revêtues de particules de matière plastique et de celles revêtues d'huile ou de charbon, entre elles, sur la périphérie du dispositif à tuyère.

7. Procédé selon la revendication 4, caractérisé en ce que la pression d'insufflation au niveau des lances (18) est supérieure de 0,5.10⁵ à 1,5.10⁵ Pa à la pression dans le haut fourneau (1).

8. Procédé selon la revendication 4, caractérisé en ce que le rapport entre la vitesse d'écoulement et le diamètre des lances (18) est tellement élevé que des agglutinations (par fusion et refusion) de la matière plastique dans les lances (18) sont évitées par réflexion de la chaleur, en particulier la vitesse d'écoulement est comprise entre 20000 et 40000 l/s.m, de préférence 25000 l/s.m.

9. Procédé selon l'une quelconque des revendications précédentes, caractérisé en ce que la température du mélange éolien est supérieure à 1100°C.

10. Procédé selon l'une quelconque des revendications précédentes, caractérisé en ce que, pour une quantité insufflée de matière plastique supérieure à 70 kg/t de fonte brute (RE), le courant aérodynamique est enrichi en O₂, en particulier avec une quantité de 0,05 à 0,1%, de préférence 0,08%, de O₂ par kg de matière plastique en excès /t RE.

11. Procédé selon l'une quelconque des revendications 1 à 10, caractérisé en ce que les particules de matière plastique sont dosées et fluidisées successivement dans des dispositifs séparés (8,9).

12. Procédé selon l'une quelconque des revendications 1 à 10, caractérisé en ce que les particules de matière plastique sont dosées et fluidisées dans un dispositif combiné de fluidisation et de dosage (8, 19), la pression d'insufflation étant continuellement adaptée par une boucle d'asservissement rapide (17) en fonction de la pression du fourneau.

13. Procédé selon la revendication 12, caractérisé en ce qu'une écluse à roue cellulaire, étanche à la pression est utilisée comme dispositif combiné de fluidisation et de dosage.
